Europäisches Patentamt

European Patent Office

Office européen des brevets

(11) Publication number: **0 351 997**
**A2**

## (12) EUROPEAN PATENT APPLICATION

(21) Application number: **89306985.6**

(22) Date of filing: **30.06.89**

(51) Int. Cl.⁴: **B60C 23/04 , B60C 29/06 , B60C 23/20**

(30) Priority: **30.06.88 GB 8815550**
**08.04.89 GB 8907949**

(43) Date of publication of application:
**24.01.90 Bulletin 90/04**

(84) Designated Contracting States:
**ES GR**

(71) Applicant: **LIQUID LEVERS LIMITED**
**Radernie By Cupar**
**Fife KY15 5LN Scotland(GB)**

(72) Inventor: **Buchanan, Nigel**
**Liquid Levers Limited Radernie**
**By Cupar Fife, KY15 5LN(GB)**

(74) Representative: **Fitzpatrick, Alan James et al**
**Fitzpatricks 4 West Regent Street**
**Glasgow G2 1RS Scotland(GB)**

(54) **Safety device for tyres.**

(57) A tyre fault device comprises a fault warning means (1) to be coupled or incorporated in a tyre valve. The fault warning means includes, in the foot part of the valve, switch means (4, 7) responsive to pressure and/or temperature conditions and radio signal means (10, 8c) to transmit a signal for reception by receiver means (2).

Said switch means (4, 7) are housed in a chamber (12) including a wall (12a) which moves in response to changing pressure and/or temperature conditions and comprises a convex disc of bimetal material. A battery (9) may be housed in a removable cap (8) and provide power via electrical leads (21A, 21B) to the radio signal means (10, 8c) incorporated in the valve body (16).

Fig. 8

TYRE ONE PA

TYRE TWO PB

## SAFETY DEVICE FOR TYRES

The present invention relates to a safety device for tyres, especially motor-vehicle tyres.

Tyre failure incidents, such as the throwing of tyre threads, is a not infrequent occurence in vehicles, especially in heavy commercial vehicles. The reason for such failure can be put down to several reasons - either the tyre pressure has become lower than that required, caused by a puncture or lack of maintenance, or the temperature of air in the tyre has exceeded the normal working level caused by overloading, excessive speed for load carried or vehicle malfunction such as faulty brakes or track alignment.

Consequently the maintenance of the tyres of a vehicle at the correct operating pressure is of paramount importance to the safety of the vehicle when driving -indeed to this end manufacturers recommend that the vehicle tyres are checked for the correct pressure prior to commencing a journey. However, due to various reasons e.g. slow punctures, deformed wheel rims, etc, tyres can lose pressure. Also, where there is overheating at a wheel a dangerous situation can arise.

Up until now there has been no satisfactory and convenient means of warning drivers of these tyre fault situations, while the vehicle is on the move.

For twin tyre wheels in lorries and trailers the main cause of overheating is tyre pressure imbalance. The reason for this is as follows. Even though these twin wheels are directly coupled together and their pressures when cold are identical, their loadings are different. The tyre with the biggest load heats up more, causing its pressure to increase which increases its load further. It is recognised that if those pressures remained the same a saving of 15 - 25% tyre wear could be achieved. That is why some lorries and trailers have only one very wide tyre instead of two narrower ones. The trouble with the latter arrangement is that a puncture is potentially more dangerous and because of their added width most of the tyre wear saving is lost by "scuffing" when turning corners.

It is the principal object of the present invention to obviate or mitigate the above problems.

Further, it is a particular object of the present invention to provide a tyre fault warning device which can be conveniently installed, but which is satisfactory and reliable in operation.

According to one aspect of the present invention, a tyre fault warning device comprises a fault warning means adapted to be coupled to or incorporated in a tyre valve, said fault warning means including radio signal means to transmit a radio signal for reception by receiver means, said receiver means including fault indicating means, and switch means responsive to pressure and/or temperature conditions in a tyre to activate said radio signal means for the issue of a radio warning signal.

Preferably said switch means are located in a foot part of a tyre valve; and preferably said switch means are housed in a chamber at said foot part, said chamber including a wall which is movable on changing pressure and/or temperature conditions in a tyre to actuate said switch means. Preferably said wall is carried by a flexible ring member, and preferably said wall comprises a convex disc of bi-metal material.

In a preferred embodiment, electrical power means for the radio signal means includes a battery housed in a removable cap of the tyre valve, electrical leads to the radio signal means being incorporated in the valve body and the cap. The cap can be secured to the valve body by a fitting means adapted to ensure that the leads to the radio signal means are complete when the cap is fitted. Preferably the cap carries an aerial of the radio signal means.

The receiving means can include suitable warning means such as a light or aural warning (e.g. buzzer), and preferably these means include a latching device to maintain the warning indication, even when the radio warning signal ceases.

According to a second aspect of the present invention air control apparatus for use with vehicle wheels of the double-tyre type comprises air control means adapted to fit on or be coupled to the valve stems of the tyres of a double-tyre wheel, said air control means including an air inlet, and conduit means for air flow between said tyres via said air control means, said air control means controlling air flow between the tyres so as to maintain substantial equal pressure between the tyres, said air control means further including an air regulating device halting air flow between the tyres when the pressure in any one of the tyres falls below a preselected value.

Preferably said air control means comprises a block element; internal conduit means in said block element; an air inlet to said internal conduit means including one-way flow valve means; said internal conduit means comprising a first air channel having a first air outlet adapted for connection to the valve stem of a first tyre of the double tyre, and a second air channel in fluid communication with said first channel and including a second air outlet adapted for connection to the valve stem of the second tyre of the double-tyre whereby the tyres can be in fluid (air) communication via said conduit means; and an air pressure responsive valve to halt air flow between the tyres via said conduit means when air pressure in the conduit means falls below the preselected value.

A pair of block elements may be provided each associated with its respective tyre of the double-tyre, conduit means being provided to connect the elements. Alternatively only a single block element may be present with a suitable conduit arrangement provided to link the element with the double-tyres.

In a preferred embodiment, signal means are provided to indicate when tyre pressure falls below a predetermined value, said signal means including transmission means for transmitting a signal to a remote location e.g. the drivers cab. Preferably further, said signal means issues a warning signal when the temperature of air in a tyre rises above a predetermined value. Said signal means preferably comprises an electric switch device.

An R.f. receiver will be provided to pick up the warning signal, and preferably this receiver is coupled to a loop ariel system adapted to extend to the vicinity of said electric circuit means. This arrangement enables the transmitted signal to be of a relatively low power value, and additionally mitigates against the receiver being triggered by spurious electric signals. The electric circuit means may have a power source in the form of a battery, but preferably the power source comprises a piezo electric device.

Embodiments of the present invention will now be described by way of example with reference to the accompanying drawings wherein:

Fig. 1 shows a side-view of a high performance motor-car fitted with a tyre-fault warning system in accordance with the present invention;

Fig. 2 shows schematically the radio transmission arrangement for warning signals in the warning system of Fig. 1;

Fig.3 shows a cross-sectional elevational view of a tyre and wheel rim portion including a tyre fault transmitting device of the system;

Fig. 4 shows a cross-sectional view of the fault transmitting device of Fig. 3 to a larger scale;

Fig. 5 shows a detail of Fig. 4 to a larger scale; and

Fig. 6 shows the instrument panel of the car of Fig. 1 fitted with tyre fault warning indicators;

Fig. 7 shows a schematic plan view of a heavy goods vehicle of the tractor/trailer type embodying an air-flow control (safety) device at each of the double-tyre wheels in accordance with the present invention;

Fig. 8 shows the air-flow control means in greater detail;

Fig. 9 shows a circuit diagram of a possible basic circuit for the transmitter of a fault-warning device of the invention;

Fig. 10 shows a pictorial view of a further embodiment (as an alternative to Fig. 8) of air-flow control means for the tyres of a vehicle double-wheel arrangement;

Fig. 11 is a sectional elevation of the air flow control means of Fig. 10 through the stepped section M-M in Fig. 10; and

Fig. 12 shows the section N-N in Fig. 11.

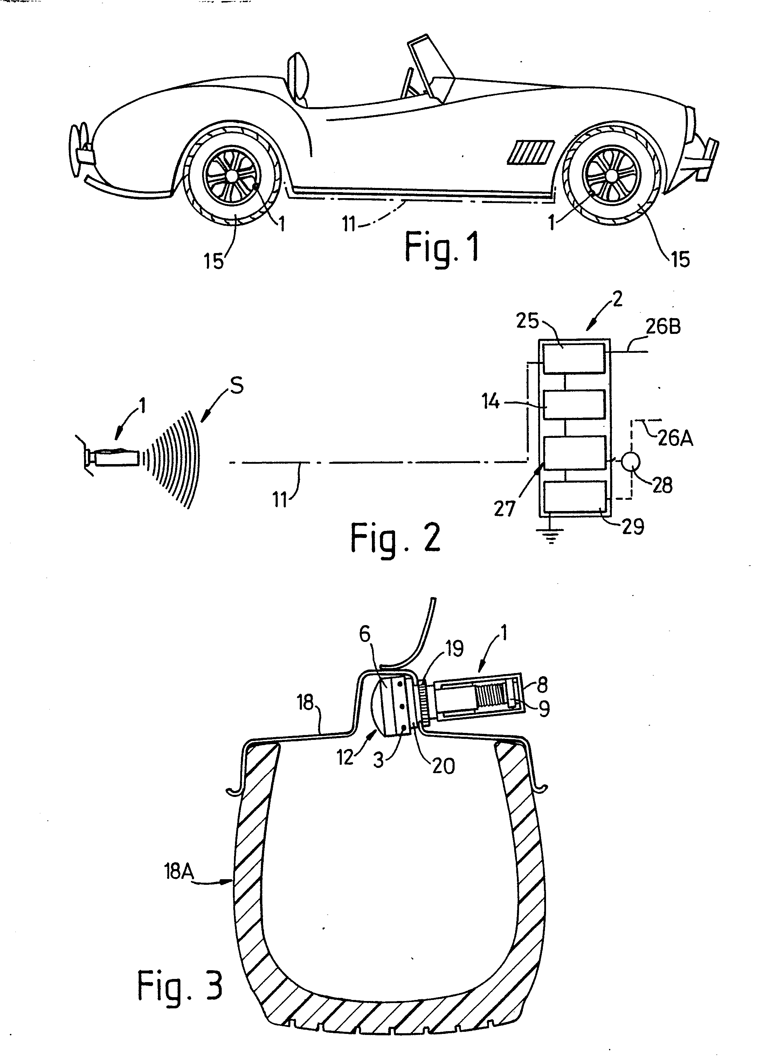

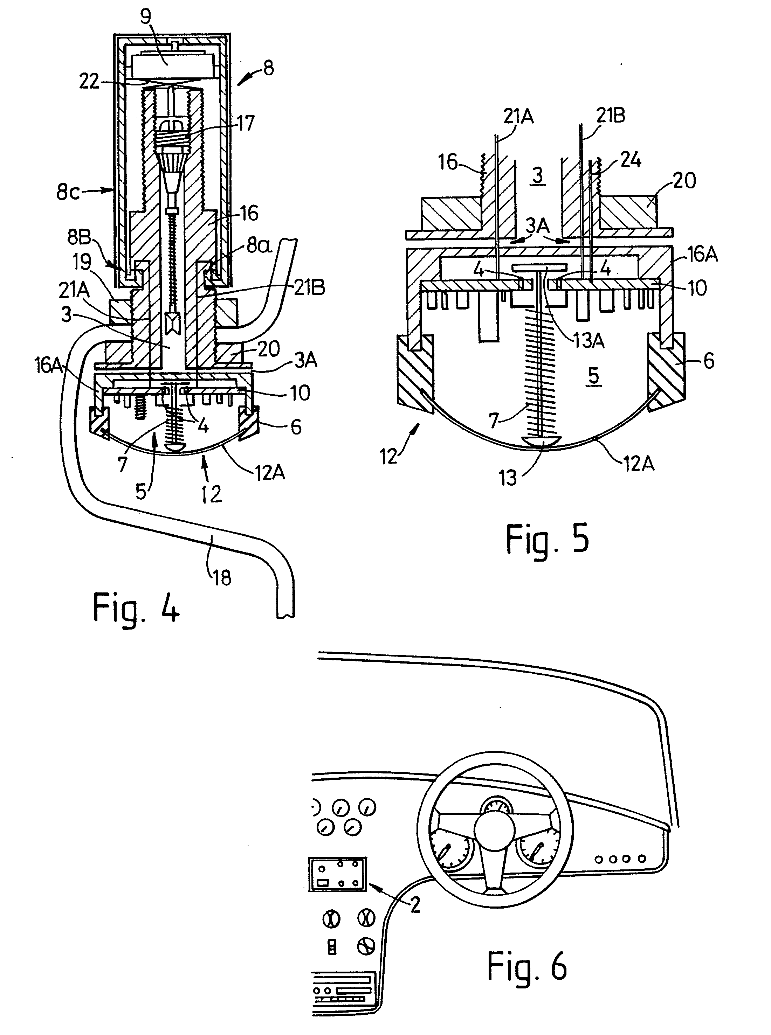

Referring to Figs. 1-6 of the drawings, a system for indicating tyre fault conditions, specifically pressure loss and overheating in the tyres, comprises tyre inflation valves which are in the form of speciald fault sensing and signal transmitting valves 1, and an aerial pick-up 11 which runs between the wheels 15 of the vehicle and which transmits fault signals from the valves 1 to fault indicating means 2 installed, for example, on the vehicles instrument panel or at some other position where it will be possible for the driver of the vehicle to see a fault warning indication issued by the indicating means 2. The indicating means 2 comprises a radio signal receiver (Fig. 2) and warning indicating means, such as a light or a buzzer. A separate warning light can be provided for each tyre so that the faulty tyre can be precisely identified. The valves 1 have the functions of sensing when tyre pressure falls by a predetermined amount and transmitting a warning radio signal when this reduced pressure condition is reached, and similarly transmitting a warning signal when there is over-heating at the tyre.

Referring more especially to Figs. 3 to 5, the special tyre valve 1 includes a main valve body 16 which is of high grade plastics material housing a conventional one-way valve device (i.e. Schrader) 17 in an air duct 3, and the body 16 has a larger diameter foot portion 16A which enables the body 16 to be tightly secured to the wheel rim 18 by a locknut 19, the body 16 being inserted through the normal valve hole in the wheelrim 18 such that the foot 16A is internally located. A sealing ring 20, positioned between the foot 16A and the wheelrim 18 ensures the desired sealing effect, while foot 16A includes externally opening air passages 3A communicating with duct 3. A special plastics cap 8 is fitted on the body 16 and includes lugs 8a whereby the cap is fitted to the body 16 by a half turn bayonet action, and by this means the cap 8, can be fitted in only one position on the body 16. The radio signal, indicating a tyre fault condition, is generated by a radio circuit on a printed circuit board 10, and the power for this circuit is taken from a small battery 9 (e.g. mercury cell type) located at the inner end of the cap 8 via electrical circuit leads 21A, 21B, electrical contacts 8B being provided between the cap 8 and the body 16 on this circuit. Further, a switch is located in this circuit 21A/B at the foot 16A comprising switch contacts 4 and a switch closing head 13A. A tension spring 22 ensures good contact between the battery 9 and the feed and return lines of the circuit 21A/B.

Operation of the closing head 13A is effected by a pressure sensitive actuator 12, responsive to tyre pressure. The pressure sensitive actuator 12 comprises a flexible ring seal 6 carried by a lower rim of the foot 16A, while a convex bi-metal disc 12A is fitted to the ring seal 6 whereby a sealed chamber 5, at atmospheric pressure is formed at the foot 16A. A rod member 13 has one end resting on the disc 12A while the other end carries the closing head 13A, compression spring 7 urging the rod member 13 against the disc 12A.

Incorporated on the cap 9 is an aerial member 8c for the transmission of radio signals 5 to be picked up by aerial 11 (Fig. 2), and this aerial member 8c is connected to the radio circuit at board 10 by lead 24. The warning indicating means 2 (Fig. 2), includes the radio receiver 25, to which the aerial 11, is fitted and which is powered by the vehicle's battery (not shown) via leads 26A, 26B, a latching unit 14, and fault indicator 27, including ON- indicator lamp 28 and buzzer 29. The latching unit 14 has the function of maintaining the fault warning signal at lamp 28, even when the warning radio signal ceases.

Existing tyres can be converted to the new system simply by removing the existing valves and replacing these with the special valves 1.

To place the warning system in an operating mode, before inflation of each tyre 18A, the contacts 4 encased in chamber 5 are closed and when the tyre is inflated to a pre-set pressure (say 26 psi/1828 gm/cm$^2$), the flexible ring seal 6 compresses and pushes against the spring 7 to move the head 13A, and thereby open the contacts 4 making a normally open circuit. The tyre is then inflated by a further amount (say 3 psi/211 gm/cm2 to 29 psi/2039 gm/cm$^2$) to the normal running pressure of the tyre in question.

When inflation is completed the special cap 8 containing the power cell 9 is fitted to the valve body 16.

This cap 8 can only be fitted in one position by means of the half turn bayonet cap action to locate lugs 8a. The fitting of the cap 8 energises the line from the battery 9 through the contacts 8b between the cap and the valve stem, then down to the open switch contacts 4.

The vehicle is then ready for normal use, but if a tyre fault develops, causing a predetermined deflation (say 3 psi/211 gm/cm$^2$ or more), then the contacts 4 close which energises the radio transmitter circuit 10 which in turn sends a radio signal via the aerial 8c, which is incorporated in the valve cap 8. This signal is picked up by the aerial 11 and passed to the receiver 25 which causes the warning light 28 for the appropriate wheel to flash, and the buzzer 29 to sound.

If, on the other hand, a fault develops which causes the tyre to overheat rather than lose pressure, the bi- metal disc 12 will flex and cause the rod 13 to move down to close the contacts 4, thus sending a warning signal to the driver, in the manner described above.

When a fault develops while the vehicle is parked, the driver shall be warned as soon as he turns the ignition key on, by virtue of the latching device 14 incorporated in the warning means 2, setting the warning signal.

Briefly therefore, with the tyre at the correct pressure and a safe temperature there is an open circuit, but with a drop in pressure or a rise in temperature, then the circuit is closed and warns the driver through a radio link.

It is a feature of the arrangement that the radio warning signal transmission can be restricted to a narrow envelope (e.g. 2 metres wide) along the length of the vehicle, so that interference problems with overtaking vehicles operating the same warning system can be avoided. The radio transmission frequency will of course be selected to satisfy the pertinent regulations of the country.

Thus the present invention provides a safe and relatively economic device which can be fitted easily and relatively quickly to a vehicle, by removing the tyre valves and replacing them with the special fault transmitting valves 1, the receiver for the radio signals of the valves 1, including the aerial 11 being relatively easily installed in the vehicle.

Modifications are of course possible. Thus it may be possible to use a power source other than a battery (9) in the device - for example a piezo electric generator could be used producing the required power for the device from vehicle vibration.

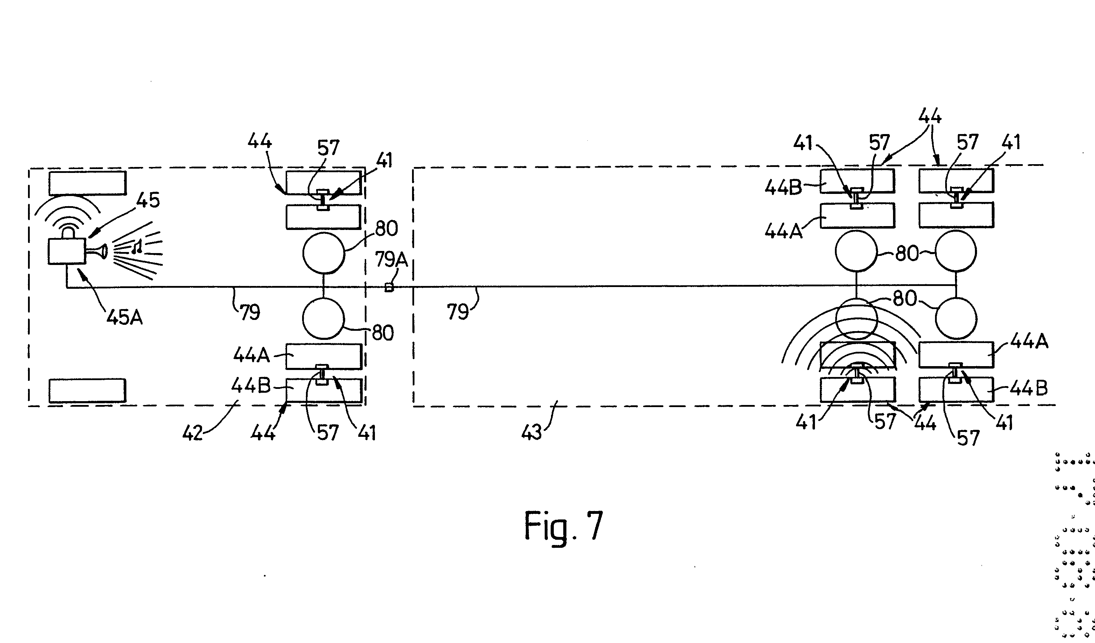

Referring now to Figs. 7-9 of the drawings, in an alternative embodiment an air-control device 41 is fitted at the double-tyre wheels 44 of a heavy goods vehicle comprising a tractor 42 (Fig. 7) and a trailer 43, the device 41 serving to maintain substantial equal pressure between the tyres 44A, 44B of the double-tyre wheel 44 and also including a warning sensor triggering an indicator 45 in the vehicle cab when the air pressure in either tyre 44A, 44B falls below a preselected value and also when there is an unacceptable increase of air temperature in either tyre 44A, 44B. Each air control device 41 comprises a pair or similar control blocks 46 each of which is screwed onto the valve stem 47 of a respective tyre 44A, 44B by means of a threaded bore 48, the arrangement being such that the block 46 is sealingly attached to the stem 47. Each stem 47 houses the usual tyre valve 49 and the block 46 houses a tube 50 of a warning sensor 64 (to be described later) having a head 50 which depresses the spring biassed valve pin 49A of valve 49 to place the valve in a permanently open position when the block 46 is fitted on the stem 47.

Each block 46 includes an air inlet 51 having a valve 52 similar to valve 49 for one way airflow through the inlet 51, and a first internal channel 53 links the inlet 51 with the bore 48. A second internal channel 54 links the bore 48 to an air outlet 55 fitted with a coupling device 56 for a connecting pipe 57 connecting the outlets 55 of the two blocks 46 of the device 41. A piston valve 58 regulates air flow through the channel 54 dependent on air pressure in the channel 53. In particular the piston valve 58 is slidingly housed in a cylindrical housing 59 and is biassed by a spring 61 into sealing engagement with annular valve seat 60, the housing 59 having a threaded externally-opening mouth portion 62 to which an adjusting screw 63 is fitted to adjust the tension of the spring 61 and hence the setting of the valve 58, bore 63A maintaining the housing 59 at atmospheric pressure.

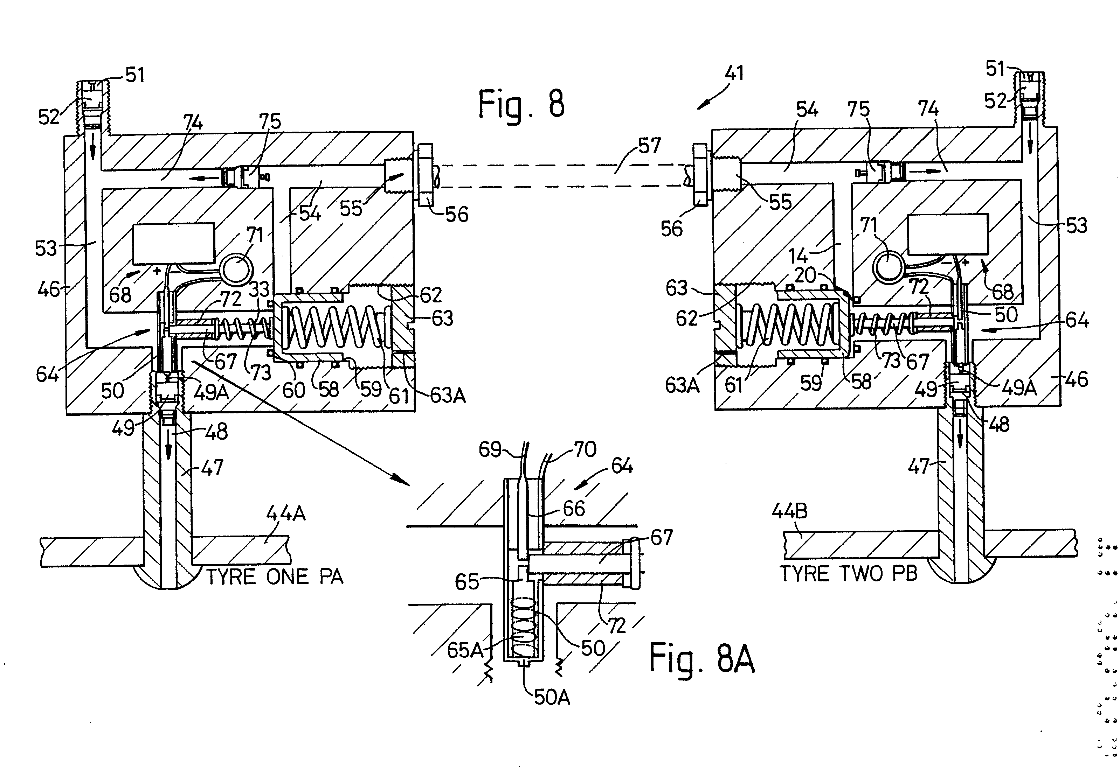

The block 46 also houses a warning sensor 64 including the tube 50 to indicate when tyre pressure falls below a (preselected) value : and it is a particular feature of the arrangement that the piston valve 58 conveniently serves for actuation of this sensor 64. Thus, the sensor 64 comprises a pair of aligned but spaced electrodes 65, 66 (see Fig 8A) housed in the tube 50 which is electrically conductive, and closure of the electrical connection is effected by a pin 67 carried by the piston 58. The sensor 64 is coupled to a radio frequency transmitter circuit 68 by leads 69, 70 fitted to electrodes 66 and tube 50 respectively. A battery 71 powers the circuit 68 which is of micro-miniaturised form with the battery for example of small selenium type. The pin 67 extends through an opening in the tube 50 and is guided in a sleeve 72 which is urged against the tube 50 by return spring 73 acting on the piston 58. Further, electrode 65 is of high thermal conductivity material e.g. copper so that the electrodes 65, 66 will abut to complete the circuit after appropriate thermal expansion of the electrode 65. In an alternative construction the electrode 65 includes a thermally expansive wax portion 65A.

A third internal channel 74 links the channels 53, 54 and includes a one-way valve 75 similar to valve 49.

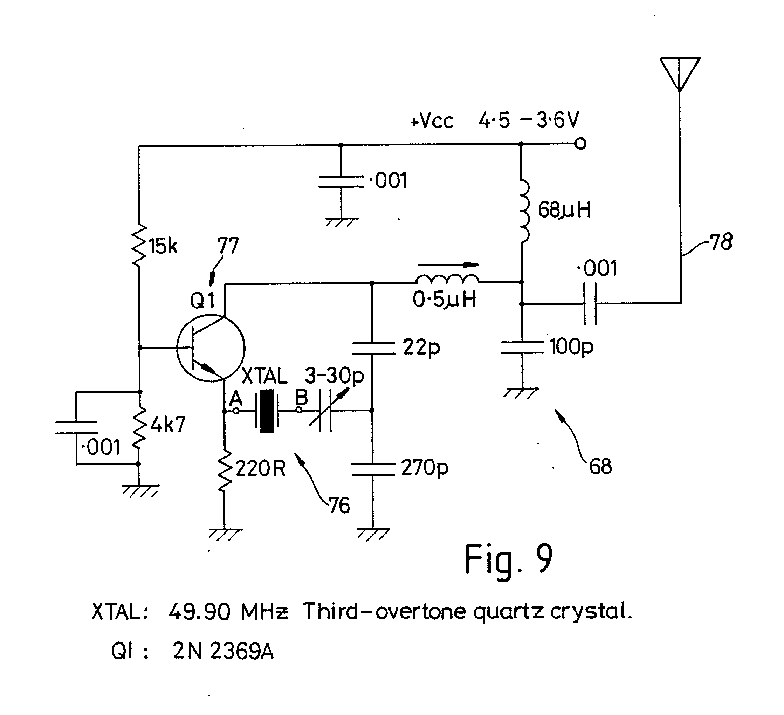

Fig. 9 shows a suitable basic arrangement for the transmitter circuit 68. The most significant (and expensive) items of the circuit are the quartz crystal 76 and the transistor 77. With regard to the transmitter antenna 78, this could be conveniently incorporated into the connecting pipe 57 e.g. by provision of wire mesh on the pipe. A suitable r.f. receiving circuit 45A (Fig. 7) associated with the indicator 45 receives the r.f. warning signal from transmitter 68 and includes an aerial system 79 extending such that aerial loops 80 of the system are located in the vicinity of the respective transmitting circuit 68. The aerial system can include a coupling 79A for the connection of tractor and trailer portions of the aerial. The positioning of the loops 80 enable the transmitters to function with relatively low power output, and the aerial system 79 will be suitably screened to mitigate against spurious/stray signals triggering the receiver 45A.

In operation, air can flow between the tyres 44A, 44B via bores 48, channels 54 and connecting pipe 57 so that tyre pressures PA, PB are kept substantially equal i.e. within 2PSI. (13789.52 N/m2) of each other, the pressures PA PB acting on the piston valves 58 to keep these valves 58 in the open position. However, if there is a continuous loss of air from one tyre, e.g. due to a puncture, the valves 58 function to close the channels 54 and thereby the inter tyre air flow, so that loss of pressure in the other tyre is limited. In particular, the valves 58 are set by means of screws 63 to close at a minimum desired air pressure (PM). As will be appreciated, the two tyres 44A, 44B can be blown up via a single block 46, specifically via a single inlet 11, so avoiding the separate inflation of each tyre 44A, 44B required previously. In this single inflating operation one tyre will be firstly inflated to the set minimum pressure level PM whereupon the valves 58 open (effected by air flowing via a channel 74) to bring the other tyre up to the pressure PM whence the tyres are inflated together to the desired operating pressure.

As an early indication of a fault developing, the temperature and pressure of air in the tyres is constantly monitored. In particular when valves 58 close at reduced pressure PM conditions electrodes 65, 66 are closed by spindle 67, or when an unacceptable temperature rise occurs electrode 65 moves or expands to again close the electrodes. In each case the r.f. transmitter circuit 68 is switched on, and a warning signal is transmitted to the vehicle cab to operate the indicator 45 e.g. visual or aural warning device. Further, a light emitting diode (L.E.D.) can be included in the circuit 68 which remains lit on fault occurence to indicate which wheel requires attention.

The operating frequency of the transmitter will of course require to meet legal requirements (e.g. for the U.K. about 49.9 MHZ), but due to the circuit 68 being of simple micro-miniature form with single frequency tuning the device 41 can be relatively compact and light. Fitment of the device 41 requires no modification to either tyres or rim.

Further, if for some reason the device 41 has to be removed, this can be done without causing deflation of the tyres as valves 49 will close automatically. Thus, the above device according to the present invention enables the tyres of a double-tyre wheel to be conveniently maintained at an equal pressure, and it is submitted that this will lead to increased tyre life and additionally to increased safety on the road.

Modifications are of course possible. For example, a piezo-electric device could replace or augment the battery to give increased operation time of the sensor 24 without maintenance. It would be possible to use a pressure and/or temperature warning sensor of quite a different type from that described. Instead of having each device 41 directly attached to the respective valve stem 47, the device 41 could be connected to the stem by a piece of tubing.

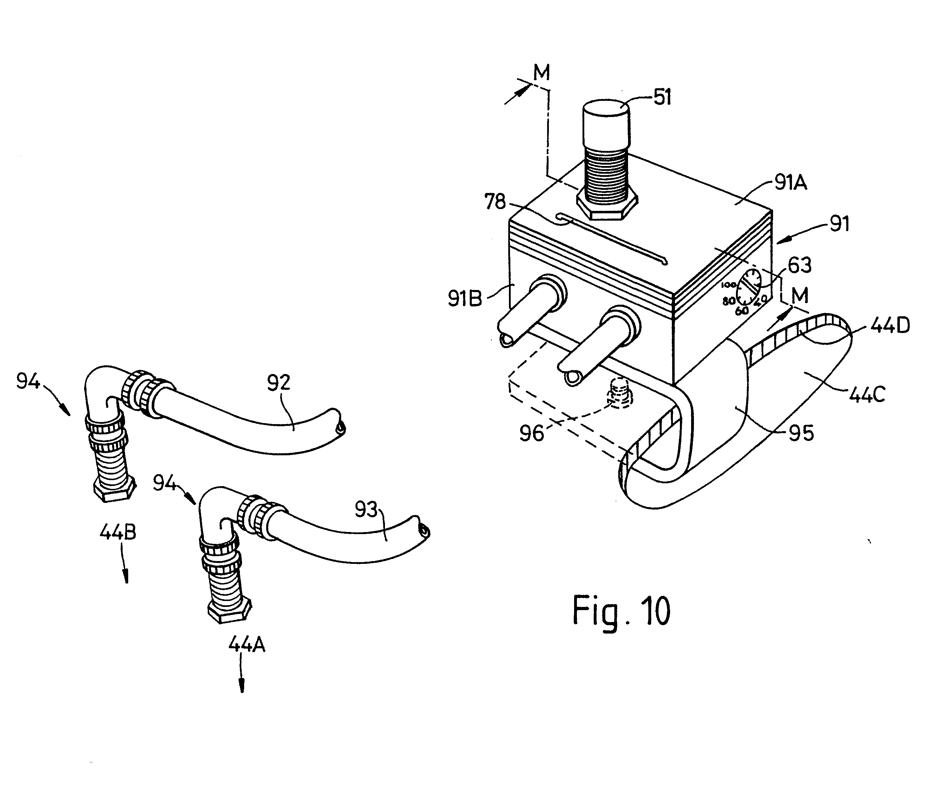

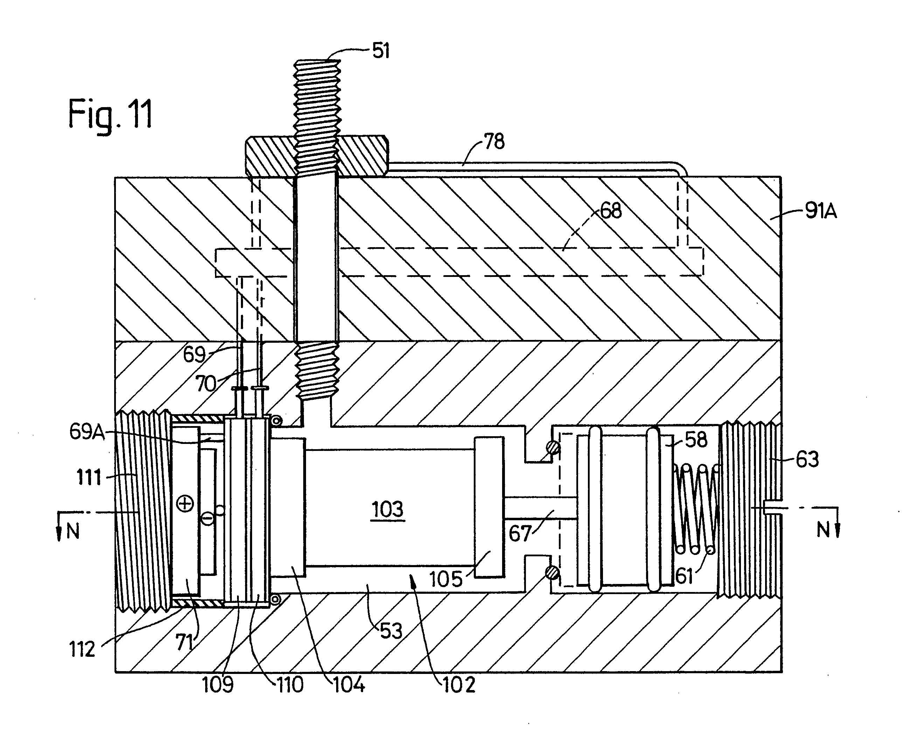

Figs. 10-12 show a further simplified embodiment of the present invention for carrying out the functions achieved by the apparatus shown in Fig. 8. In this case only a single block element 91 is utilised per twin tyres (44A, 44B). Like parts however to the parts of Figs. 7 to 9 carry like reference numerals for convenience of understanding. The single block element 91 is fluidly connected to the stems 47 of the double-tyre 44A, 44B by means of suitably arranged flexible conduits 92, 93 (Fig. 10), a suitable connecting piece 94 being provided at the outer end of each conduit 92, 93·which piece is fitted onto the relevant tyre stem 47 such that the valve (49) on the stem is opened. The block element 91 is securely fixed to the double wheel (44) at a suitable location such that the conduits 92, 93 can pass to their respective valve stems 47. Thus in this example the block element 91 is carried by a U-piece 95 which can be caused to overlie a wheel bub part 44D by having one limb of the U-piece extends through a vent aperture 44C in the wheel bub and the element 91 is clamped in position on the wheel by a screw 96 extending through a said one limb of the U-piece 95 and engaging the wheel bub 44D. An appropriate one of the conduits 92, 93 can pass through a wheel vent aperture to its respective valve stem (47).

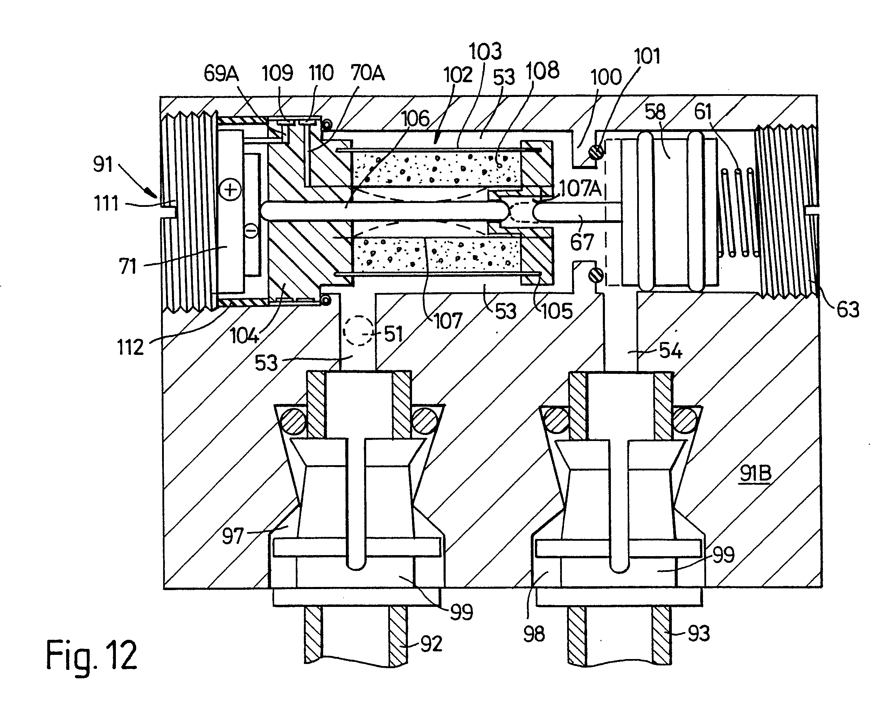

The element 91 includes an upper layer 91A of plastics material in which is embedded the circuit 68 of the fault warning arrangement, and a metallic lower layer 91B housing the channels 93, 94 and associated parts. The layer 91B has recesses 97, 98 to receive end-pieces 99 of the conduits 92, 93 for example in snap-fitting manner, so that the conduits 92, 93 are in fluid communication with the internal channels 53, 54 respectively. The piston valve 58 abuts against a sealing ring 101 on annular shoulder 100 (as shown dashed in Fig. 12) for closure of the channel 54, and, as previously, the screw 63 which is suitably calibrated controls the operating pressure setting of the valve 58 via spring 61. The air inlet 51 including a one-way valve feeds into the channel 53. Energisation of the warning-signal circuit 68 for the reduced tyre pressure condition or an excessive temperature condition is achieved by a control device 102 operating in conjunction with the piston valve 58. Thus the device 102 comprises a rigid outer cylinder 103 carried by end carrier members 104, 105 of insulating material, the members 104, 105 also serving to support a central rod 106 of electrical conductive material.

An internal thin-walled deformable cylinder 107 of electrical conductive material (e.g. metal) is also carried by members 104, 105 so as to be concentric with the cylinder 103 but radially spaced by a suitable distance from the rod 106, the annular space 108 between the cylinders 103, 107 being filled with a thermal expansive substance e.g. wax. The member 104 incorporates an electrical lead 69A engaging the positive side of battery 71, while a further electrical lead 70A in member 104 is joined to the cylinder 107 and an electrical spring contact 107A from cylinder 107 engages the rod 67 of piston valve 58. The rod 106 abuts the negative side of battery 71 and the circuit 68 can be completed when rod 67 abuts rod 106 (at reduced pressure conditions) or when cylinder 107 is deformed (as shown dashed) by the expansion of the substance in space 108 to engage rod 107 at excessive temperature conditions.

Electrical connection between leads 69/70 and 69A/70A respectively is achieved by electrical conducting rings 109, 110 on the member 104 so that electrical contact is always achieved regardless of the angular position of the device 102 in the channel 53. Access to the battery 71 is easily achieved through a cap 111 of insulating material screwed into layer 91B, an insulating ring 112 being present between the cap 111 and the device 102.

In respect of air pressure control of the double tyres 44A, 44B, the element 91 operates similarly to the double-unit device 41 of Fig. 8. Thus air injected via inlet 51 in addition to passing to a tyre via conduit 91 also passes without substantial obstruction via the device 102 and the aperture at shoulder 100 to react against the piston valve 58 whereby when the air pressure in channel 53 increases beyond the preselected level the valve 58 is moved to the open position to allow air to pass via channel 54 and conduit 93 to the other tyre and in this situation pressure balance is achievable between the tyres by means of the open channel 53, 54. In the event of excess air loss e.g. on puncture occurrence, the valve 58 closes to block air-flow between conduits 92, 93. By virtue of the cylinder 103 being fully surrounded by air in the channel 53, response of the device 102 to excess temperature conditions is accurate and sensitive.

The block element 91 can replace the devices 41 in the vehicle arrangement shown in Fig. 7, and the warning device 45 will be operated similarly. The element 91 can be of small size and lightweight: thus the element 91 could have sides with a length of 50 mm or even less.

## Claims

1. A tyre fault warning device comprising a fault warning means to be carried by a vehicle wheel characterised in that the fault warning means (1) is adapted to be coupled to or incorporated in a tyre valve,in that said fault warning means (1) includes radio signal means (10, 8c) to transmit a radio signal for reception by receiver means (2), in that said receiver means (2) includes fault indicating means, and in that switch means (4, 7) are provided responsive to pressure and/or temperature conditions in a tyre to activate said radio signal means (10, 8c) for the issue of a radio warning signal

2. A device according to claim 1, characterised in that said switch means (4, 7) are located in a foot part of a tyre valve.

3. A device according to claim 2, characterised in that said switch means (4, 7) are housed in a chamber (12) at said foot part, said chamber (12) including a wall (12A) which is movable on changing pressure and/or temperature conditions in a tyre to actuate said switch means (4, 7).

4. A device according to claim 3, characterised in that said wall (12A) is carried by a flexible ring member (6).

5. A device according to claim 2 or 3, characterised in that said wall (12a) comprises a convex disc of bi-metal material.

6. A device according to any one of the preceding claims, characterised in that electrical power means for the radio signal means (10, 8c) are provided including a battery (9) housed in a removable cap (8) of the tyre valve, electrical leads (21A, 21B) to the radio signal means (10) being incorporated in the valve body (16) and the cap (8).

7. A device according to claim 6, characterised in that the cap (8) is secured to the valve body (16) by a fitting means (8a) adapted to ensure that the leads (21A, 21B) to the radio signal means (10) are complete when the cap (8) is fitted.

8. A device according to claim 6 or 7, characterised in that the cap (8) carries an aerial (8c) of the radio signal means (10).

9. A device according to any one of the preceding claims, characterised in that the receiving means (2) include warning means (27) such as a light (28) or aural warning (29), e.g. buzzer.

10. A device according to claim 9, characterised in that said warning means (27) includes a latching device (14) to maintain the warning indication, even when the radio warning signal ceases.

11. Air control apparatus for use with vehicle wheels of the double-tyre type, characterised by comprising air control means (41, 91) adapted to fit on or to be coupled to the valve stems (47) of the tyres (44A, 44B) of a double-tyre wheel (44), said air control means (41, 91) including an air inlet (51) and conduit means (53, 34) for air flow between said tyres (44A, 44B) via said air control means, said air control means (41, 91) controlling air flow between the tyres (44A, 44B) so as to maintain substantial equal pressure between the tyres (44A, 44B),said air control means (41, 91) further including an air regulating device (58) halting air flow between the tyres (44A, 44B) when the pressure in any one of the tyres (44A, 44B) falls below a preselected value.

12. Apparatus according to claim 11, characterised in that said air control means (41, 91) comprises a block element (91A, 91B); internal conduit means (53, 54) in said block element; an air inlet (51) to said internal conduit means (53, 54) including one-way flow valve means (52); said internal conduit means comprising a first air channel (53) having a first air outlet adapted for connection to the valve stem (47) of a first tyre of the double tyre, and a second air channel (54) in fluid communication with said first channel (53) and including a second air outlet adapted for connection to the valve stem (47) of the second tyre of the double-tyre whereby the tyres (44A, 44B) can be in fluid (air) communication via said conduit means (53, 54) and an air pressure responsive valve (58) to halt air flow between the tyres (44A, 44B) via said conduit means (53, 54) when air pressure in the conduit means (53, 54) falls below the preselected value.

13. Apparatus according to claim 11 or 12, characterised in that radio signal means (68, 78) are provided to indicate when tyre pressure falls below a predetermined value said signal means including transmission means (79, 80) for transmitting a signal to a remote location e.g. the drivers cab.

14. Apparatus according to claim 13, characterised in that said signal means (68, 78) issues a warning signal when the temperature of air in the tyre (44A, 44B) rises above a predetermined value.

15. Apparatus according to claim 13 or 14, characterised in that said signal means (68, 58) comprises an electric switch device (50, 102).

16. Apparatus according to any one of claims 13 to 15, characterised in that a radio frequency receiver (45) to pick up the warning signal is coupled to a loop ariel system (78, 80) adapted to extend to the vicinity of radio transmitters (68) of the signal means.

17. Apparatus according to claim 15, characterised in that the air requlating device (58) comprises a piston valve, and in that said piston valve (58) serves for actuation of the electrical switch device (50, 102).

18. Apparatus according to claim 15, characterised in that temperature responsive means (65, 65A, 108) are provided to close the electrical switch device (50, 102) when the air temperature in the conduit means (53, 54) exceeds a predetermined level.

19. Apparatus according to claim 18, characterised in that the temperature responsive means comprises an elongate annular member (103, 107, 108) including a thermal responsive medium and a flexible wall (107) which is deformed by the expansion of the temperature responsive medium to close the electrical switch device.

20. Apparatus according to claim 12, characterised in that a pair of block elements (46) is provided, and a connecting conduit (57) serves to join these elements (46).

21. Apparatus according to claim 19, characterised in that the block element (46) is directly secured to a valve stem (47).

22. Apparatus according to claim 12, characterised in that a single block element (91) is fluidly connected to the valve stems (47) of both tyres (44A, 44B) by conduit means (92, 93).

Fig. 1

Fig. 2

Fig. 3

Fig. 4

Fig. 5

Fig. 6

Fig. 7

EP 0 351 997 A2

Fig. 8

Fig. 8A

EP 0 351 997 A2

78

+Vcc  4·5 – 3·6V

68µH

·001

100p

68

0·5µH

·001

22p

270p

76

XTAL  3-30p

B

A

220R

77

Q1

15k

4k7

·001

Fig. 9

XTAL:  49.90 MHz  Third–overtone quartz crystal.

QI :  2N 2369A

Fig. 10

EP 0 351 997 A2

Fig. 11

EP 0 351 997 A2

Fig. 12